# EUROPEAN PATENT SPECIFICATION

(11) **EP 3 265 020 B1**
(45) Date of publication and mention of the grant of the patent: **10.06.2020**
(21) Application number: 16758566.0
(22) Date of filing: 03.03.2016
(51) Int. Cl.: A61C 8/00, A61C 13/12, A61C 13/225

(54) **DENTAL IMPLANT INSTALLATION ASSEMBLY**
ANORDNUNG ZUM EINSETZEN EINES ZAHNIMPLANTATS
ENSEMBLE D'INSTALLATION D'IMPLANT DENTAIRE

(30) Priority: 04.03.2015 US 201562128054 P
(43) Date of publication of application: 10.01.2018
(73) Proprietor: Tav - Medical Ltd., 2283202 Shlomi (IL)
(72) Inventor: BEN SHABAT, Meir, 2283202 Shlomi (IL); BEN SHABAT, Dan, 2283202 Shlomi (IL); BEN SHABAT, Oded, 2283202 Shlomi (IL)
(74) Representative: Evens, Paul Jonathan
(86) International application number: PCT/IL2016/050249
(87) International publication number: WO 2016/139673

(56) References cited:
- WO-A1-98/53755
- WO-A1-2014/108327
- WO-A1-2014/198682
- US-A1- 2003 143 514
- US-A1- 2007 202 361
- US-A1- 2008 254 411
- US-A1- 2010 248 181

## Description

### FIELD OF THE INVENTION

The present invention relates generally to dental implants and more specifically to dental implant installation assemblies.

### BACKGROUND OF THE INVENTION

Various types of dental implant installation assemblies are known in the art. WO 2014/198682 A1 discloses a threaded dental implant intended to be screwed into a jawbone for supporting at least one abutment and/or a dental superstructure, and having a socket arrangement with a first section and a second section with respective geometrical profiles around a longitudinal center axis of the implant, wherein the first section is devised to cooperate with the abutment for securing the abutment in a determined position in the implant, wherein the second section is devised to cooperate with an insertion tool for screwing the implant into the jawbone. US 2010/248181 A1 discloses an arrangement for insertion of an dental implant, which has an external thread and can be screwed into a bone by means of a tool, wherein the implant has a receiving opening with an at least partially conical inner face. A pin of an attachment part, which can be connected to the implant after the insertion, can be fitted into the receiving opening. The screwing-in tool has a pin with a conical outer face, which pin engages in the receiving opening of the implant, and that the conical outer face is designed corresponding to the conical inner face of the implant, and bears at least partially thereon, such that at least a predetermined part of the torque necessary for screwing in the implant can be transmitted via the self-inhibiting cone connection of the screwing-in tool with the implant.

WO 2014/108327 A1 discloses an insertion tool for a dental implant, comprising a shaft extending along a longitudinal axis and having a distal end and a proximal end, the tool further comprising an annular resilient retention member formed of a metal material and connected to said shaft such that at least a section of the member protrudes from a surface of said shaft.

WO 98/53755 A1 discloses a case with a receptacle and a dental implant arranged therein.

### SUMMARY OF THE INVENTION

The present invention seeks to provide novel dental implant installation assemblies, particularly well-suited for use with dental implants susceptible to damage during installation.

There is thus provided in accordance with a preferred embodiment of the present invention a dental implant installation assembly according to claim 1.

Preferably, the dental implant body includes zirconia.

Preferably, the implantation tool includes titanium and has a titanium oxide coating integrally formed thereon.

Preferably, the portion includes a protrusion.

In accordance with a preferred embodiment of the present invention the opening includes a generally hexagonally shaped opening and the portion includes a generally hexagonally shaped portion.

Preferably, the dental implant body includes an internal threaded bore adapted for receipt of the screw therein.

Preferably, the implantation tool includes a cylindrical body having an additional internal bore adapted for receipt of the screw therein.

Preferably, the dental implant body includes an annular generally flat uppermost surface circumferentially surrounding the opening, a chamfered outwardly sloping segment abutting the uppermost surface and a chamfered inwardly sloping segment abutting the chamfered outwardly sloping segment.

In accordance with a preferred embodiment of the present invention, the implantation tool includes a flat base peripheral to the portion, the uppermost surface including the at least first surface, the flat base including the at least second surface.

In accordance with another preferred embodiment of the present invention, the implantation tool includes a beveled side wall peripheral to the portion, the chamfered outwardly sloping segment including the at least first surface, the beveled side wall including the at least second surface.

In accordance with still another preferred embodiment of the present invention, the implantation tool includes a beveled side wall and a flat apex peripheral to the portion, the uppermost surface and the chamfered outwardly sloping segment including the at least first surface, the flat apex and the beveled side wall including the at least second surface.

Preferably, the beveled side wall exerts internally directed radial forces on the dental implant body, the internally directed radial forces opposing the torsion torque.

Preferably, the second surface peripheral to the portion includes a continuous surface.

Alternatively, the second surface peripheral to the portion includes a segmented surface.

Preferably, the implantation tool includes a multiplicity of holes adapted for receipt of a tool therein.

Preferably, the torque is exerted by the implantation tool on the dental implant body by manually twisting the implantation tool.

Preferably, a torque ratchet is used to manually twist the implantation tool.

Preferably, an anti-rotation tool is used to secure the implantation tool during disassembly of the dental implant installation assembly following installation of the dental implant body.

Preferably, the implantation tool is a single-use tool.

### BRIEF DESCRIPTION OF THE DRAWINGS

The present invention will be understood and appreciated more fully from the following detailed description, taken in conjunction with the drawings in which:
Figs. 1A, 1B, 1C and 1D are simplified schematic respective isometric, front, cross-sectional and exploded view illustrations of a dental implant installation assembly, constructed and operative in accordance with a preferred embodiment of the present invention;
Figs. 2A, 2B and 2C are simplified schematic respective front, cross-sectional and top view illustrations of a dental implant useful in a dental implant installation assembly of the type shown in Figs. 1A - ID;
Figs. 3A, 3B and 3C are simplified schematic respective front, cross-sectional and top view illustrations of an implantation tool useful in a dental implant installation assembly of the type shown in Figs. 1A - 1D;
Figs. 4A, 4B are 4C are simplified schematic respective isometric, front and cross-sectional view illustrations of a dental implant installation assembly, constructed and operative in accordance with another preferred embodiment of the present invention;
Figs. 5A, 5B and 5C are simplified schematic respective front, cross-sectional and top view illustrations of an implantation tool useful in a dental implant installation assembly of the type shown in Figs. 4A - 4C;
Fig. 6 is a simplified top view illustration of a dental implant useful in a dental implant installation assembly of the type shown in Figs. 4A - 4C, showing forces acting thereon;
Figs. 7A, 7B are 7C are simplified schematic respective isometric, front and cross-sectional view illustrations of a dental implant installation assembly, constructed and operative in accordance with a further preferred embodiment of the present invention;
Figs. 8A, 8B and 8C are simplified schematic respective front, cross-sectional and top view illustrations of an implantation tool useful in a dental implant installation assembly of the type shown in Figs. 7A - 7C;
Fig. 9 is a simplified top view illustration of a dental implant useful in a dental implant installation assembly of the type shown in Figs. 7A - 7C, showing forces acting thereon;
Fig. 10 is a simplified schematic illustration of an alternative embodiment of an implantation tool, constructed and operative in accordance with still another preferred embodiment of the present invention;
Figs. 11A and 11B are respectively a simplified pictorial illustration and cross-section thereof of a system for installation of a dental implant using a dental implant installation assembly constructed and operative in accordance with a preferred embodiment of the present invention;
Figs. 12A, 12B and 12C are respectively a first simplified pictorial illustration, a cross-section thereof and a second simplified pictorial illustration of a system for disassembling a dental implant installation assembly following insertion of a dental implant, constructed and operative in accordance with a preferred embodiment of the present invention; and
Fig. 13 is a flow chart illustrating a method for coating a titanium element.

### DETAILED DESCRIPTION OF PREFERRED EMBODIMENTS

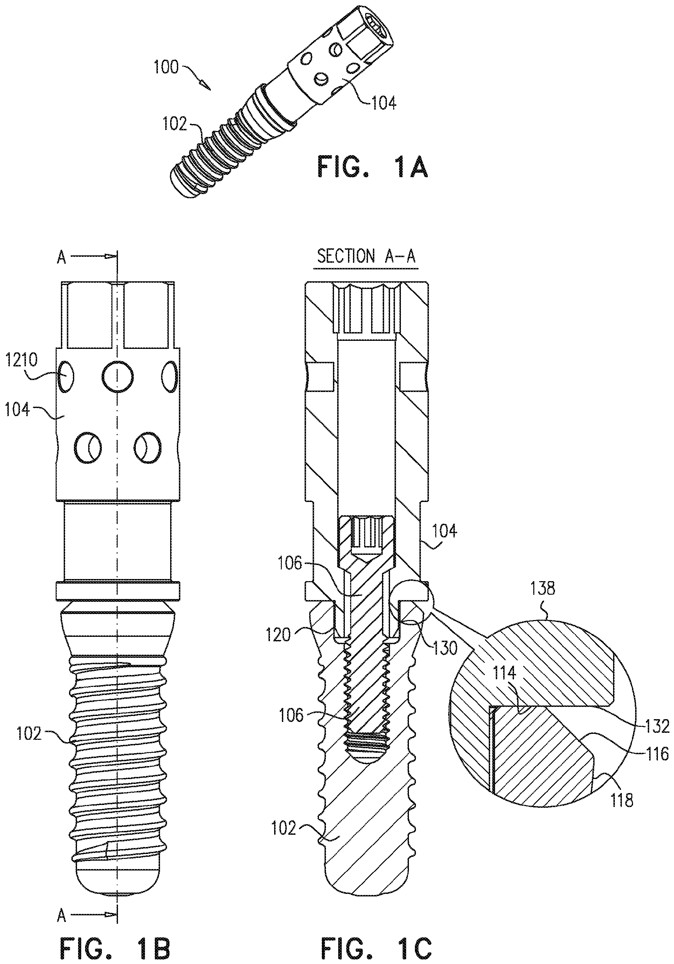

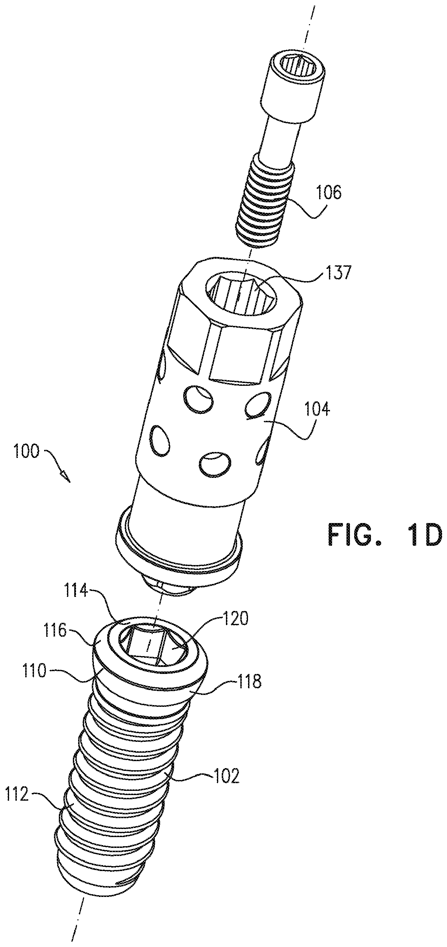

Reference is now made to Figs. 1A - ID, which are simplified schematic respective isometric, front, cross-sectional and exploded view illustrations of a dental implant installation assembly, constructed and operative in accordance with a preferred embodiment of the present invention.

As seen in Figs. 1A - 1D, there is provided a dental implant installation assembly 100 preferably including a dental implant body 102 and an implantation tool 104 mounted on dental implant body 102. Installation assembly 100 further preferably includes a screw 106 connecting dental implant body 102 to implantation tool 104. Dental implant body 102 may be any dental implant suitable for insertion into the jaw bone of a patient by way of application of a torque to the dental implant body. Particularly preferably, dental implant body 102 may be formed by zirconia. Zirconia dental implants tend to be susceptible to damage due to fractures or deformation occurring as a result of application of a torque thereto during installation. It is a particular feature of a preferred embodiment of the present invention that the use of implantation tool 104 to install dental implant body 102 allows the application of a sufficiently strong torque to dental implant body 102 to ensure secure installation thereof whilst preventing damage to dental implant body 102, by distributing the installation torque over the dental implant body in a manner to be detailed henceforth.

Dental implant body 102 preferably comprises a head portion 110 and a threaded base portion 112 extending therefrom. As seen most clearly in Figs. ID - 2C, head portion 110 preferably has a generally annular flat uppermost surface 114, a chamfered outwardly sloping segment 116 located beneath top surface 114 and a chamfered inwardly sloping segment 118 located beneath chamfered outwardly sloping segment 116 and atop of threaded base portion 112.

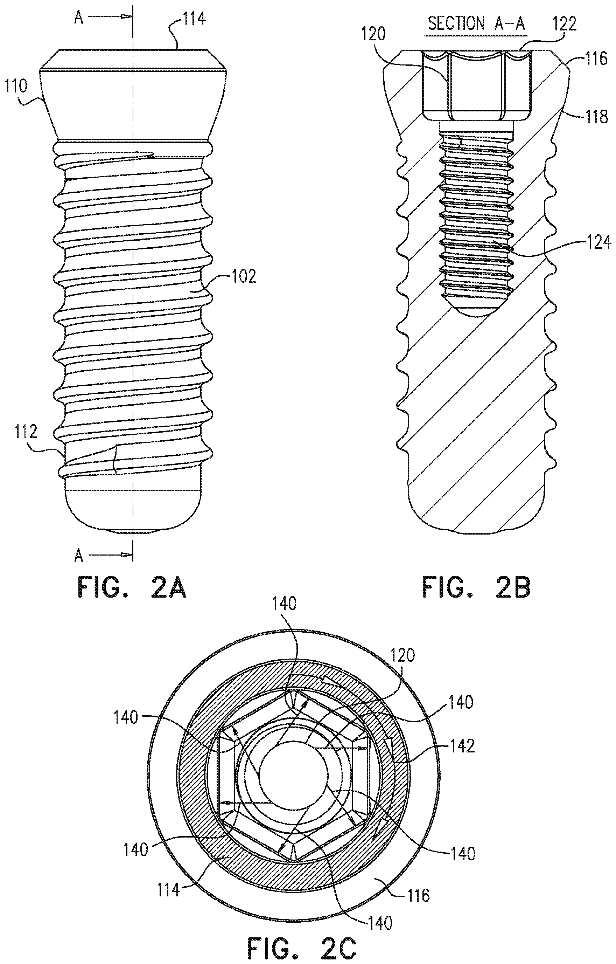

Dental implant body 102 preferably includes an opening and at least a first surface peripheral to the opening, here embodied, by way of example, as a hexagonal opening 120 preferably centrally formed in head portion 110 and having uppermost surface 114 peripheral thereto. Uppermost surface 114 preferably forms a flat ring circumferentially surrounding an upper rim 122 of opening 120 and generally level therewith, as seen most clearly in Figs. 2B and 2C. Opening 120 is here shown to have a generally hexagonal configuration, the apices of the hexagon lying along the locus of the inner circumference of the ring formed by surface 114, as seen in Fig. 2C. An inner threaded bore 124 preferably extends beneath opening 120 within base portion 112, which inner threaded bore 124 is preferably adapted for the receipt of screw 106 therein.

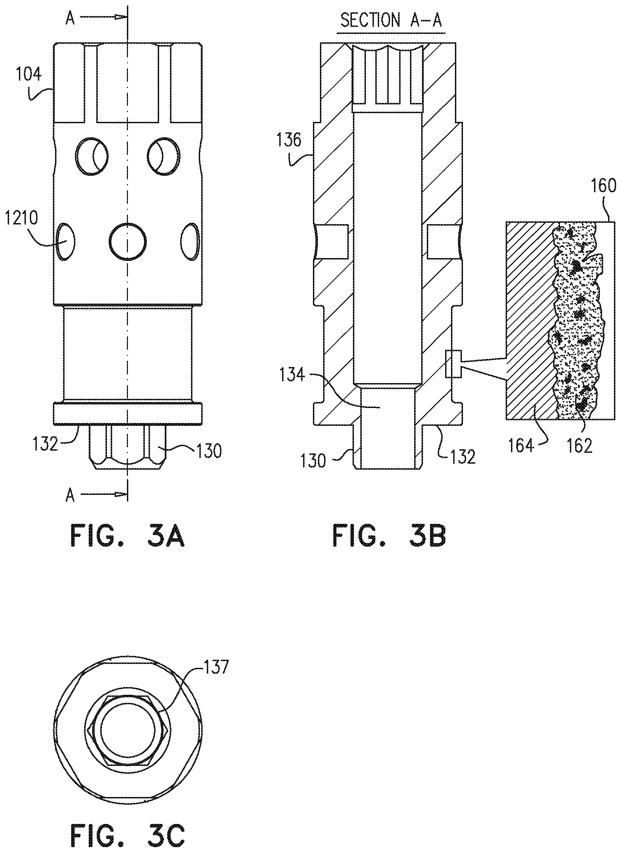

Implantation tool 104 preferably has a lower portion 130 adapted for insertion in opening 120 and at least a second surface peripheral to portion 130, here embodied, by way of example, as a generally flat second surface 132, from which second surface 132 lower portion 130 preferably extends, as seen most clearly in Figs. 3A - 3C. Lower portion 130 is preferably embodied as a hexagonal protrusion compatible for insertion in hexagonal opening 120.

An inner bore 134 is preferably formed within a generally cylindrical body 136 of implantation tool 104 for receipt of screw 106 therein. Inner bore 134 preferably has a generally hexagonal entrance 137 located at a top end of cylindrical body 136. When installation assembly 100 is in an assembled state, protrusion 130 of implantation tool 104 is inserted in opening 120 of implant body 102. Implantation tool 104 is secured to implant body 102 by insertion of screw 106 in inner bore 134 of implantation tool 104 and subsequent screwing of screw 106 into threaded bore 124.

Upon assembly of installation assembly 100, at least first and second surfaces of implant body 102 and implantation tool 104 respectively are in mutual contact. Here, by way of example and as seen most clearly at enlargement 138 in Fig. 1C, first uppermost surface 114 of implant body 102 is engaged and in contact with second surface 132 of implantation tool 104 when installation assembly 100 is in its assembled state. It is appreciated that implantation tool 104 is thus engaged with implant body 102 at at least two spatially distributed contact regions, namely the contact region formed at the interface between lower portion 130 and opening 120 and the contact region formed at the interface between first uppermost surface 114 and second surface 132.

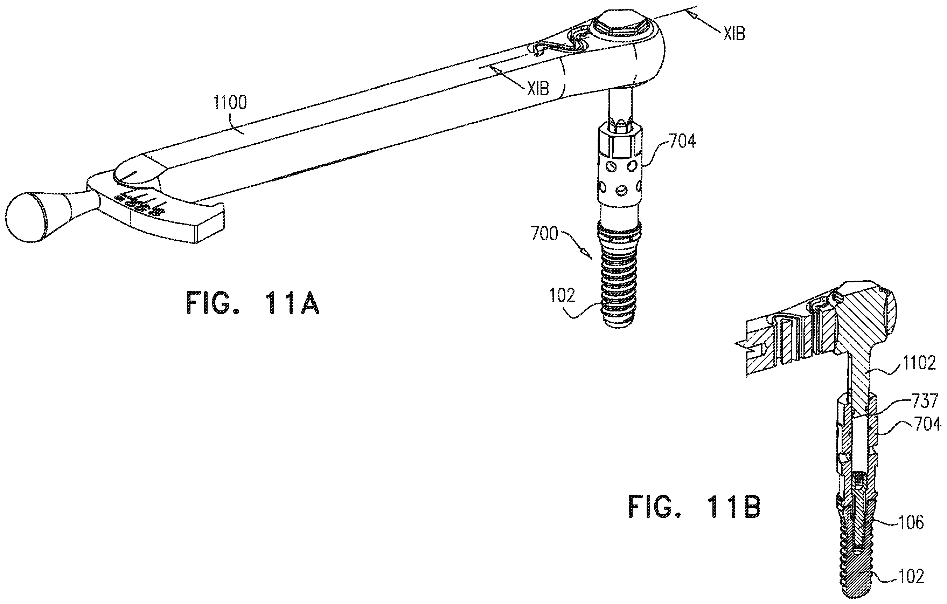

During installation of dental implant body 102, a torque is exerted by implantation tool 104 on dental implant body 102. The torque exerted by implantation tool 104 on dental implant body 102 may be originally applied to implantation tool 104 manually or electronically, by hand and/or via tools, as will be explained in greater detail with reference to Figs. 11 - 12C henceforth.

Due to the configuration of the multiple, spatially distributed contact regions between the implantation tool 104 and the dental implant 102, the torque applied by implantation tool 104 on dental implant body 102 is distributed over dental implant body 102 at least as a torsion torque at opening 120 and a friction torque at first uppermost surface 114.

The application of the torsion and friction torques may be best understood by reference to Fig. 2C. As seen in Fig. 2C, a torsion torque creating an inner radial force denoted by a first set of arrows 140, is preferably exerted by protrusion 130 at hexagonal opening 120. The radial forces 140 are primarily exerted in the region of the apices of hexagonal opening 120 due to contact thereat between the lumen of the hexagonal opening 120 and the corresponding apices of hexagonal protrusion 130. In addition, a friction torque, creating a force denoted by a second arrow 142, is preferably exerted by second surface 132 on first surface 114, as indicated at the hatched region of implant body 102. It is appreciated that an additional moment is exerted by screw 106 at the region of contact thereof with inner threaded bore 124.

As appreciated from consideration of Fig. 2C, the torsion torque and friction torque are complementary and create moments in the same direction, such that both the torsion and friction torques contribute to the overall torque applied to the implant body 102. Due to the spatial distribution of the torsion torque and friction torque, only a portion of the torque exerted by the implantation tool 104 is applied at the hexagonal opening 120. This distribution of the torque applied to the dental implant body 102 and consequent reduction of the torque applied to the dental implant body 102 at the hexagonal opening 120, allows a greater total torque to be applied to the dental implant body 102 by the implantation holder 104. In the absence of the implantation holder 104, should an installation torque be applied directly to the implant body, only a weaker force may be applied to the implant body due to the likelihood of damage thereto.

Implantation tool 104 may be formed by Titanium. As is well known in the art, titanium tools tend to leave marks on zirconia implants, which marks may be aesthetically displeasing. It is a further particular feature of a preferred embodiment of the present invention that implantation tool 104 may be coated by a layer of titanium oxide, as seen most clearly at an enlargement 160 in Fig. 3B, showing a highly magnified schematic representation of a titanium oxide layer 162 formed on a titanium surface 164.

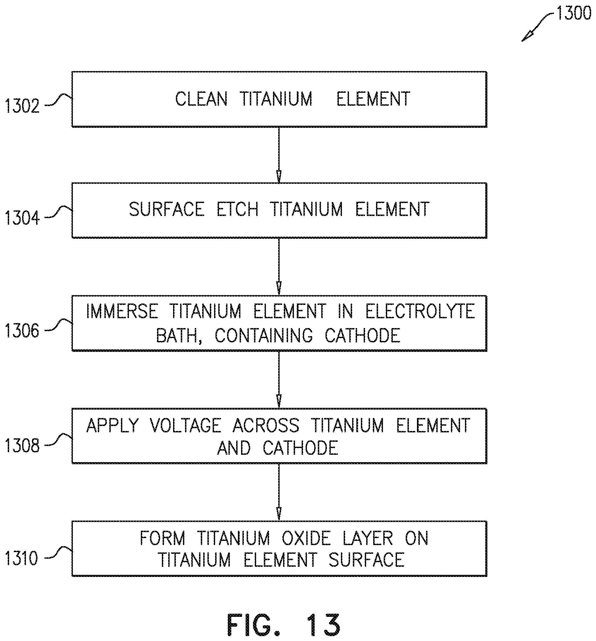

The titanium oxide coating 162 is preferably integrally bonded to the titanium surface 164 of implantation tool 104 by way of oxidation of the titanium substrate 164 provided by the tool itself and is therefore strongly adhered thereto. The titanium oxide coating 162 may be formed by electrolysis, in a manner detailed below with reference to Fig. 13. The titanium oxide coating preferably does not leave marks on zirconia and therefore leads to an improved aesthetic appearance of the installed zirconia implant body 102. Furthermore, the titanium oxide coating is preferably harder than the original titanium comprising tool 104 and therefore more stable.

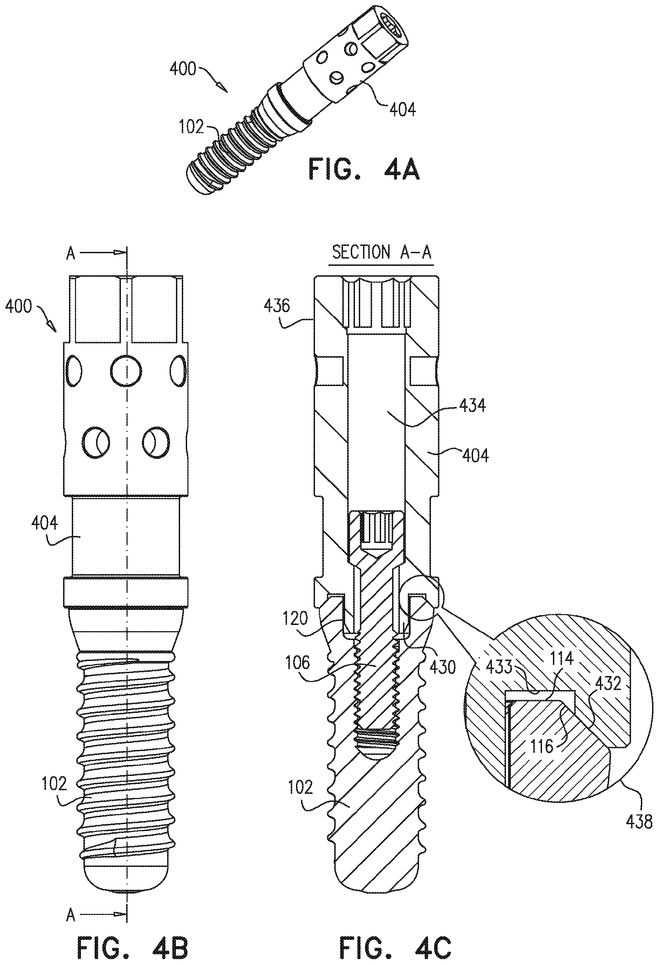

Reference is now made to Figs. 4A - 4C, which are simplified schematic respective isometric, front and cross-sectional view illustrations of a dental implant installation assembly, constructed and operative in accordance with another preferred embodiment of the present invention.

As seen in Figs. 4A - 4C, there is provided a dental implant installation assembly 400 preferably including dental implant body 102 and an implantation tool 404 mounted on dental implant body 102. Installation assembly 400 further preferably includes screw 106 connecting dental implant body 102 to implantation tool 404. It is a particular feature of a preferred embodiment of the present invention that the use of implantation tool 404 to install dental implant body 102 allows the application of a sufficiently strong torque to dental implant body 102 to ensure secure installation thereof whilst preventing damage to dental implant body 102, by distributing the installation torque over the dental implant body in a manner to be detailed henceforth.

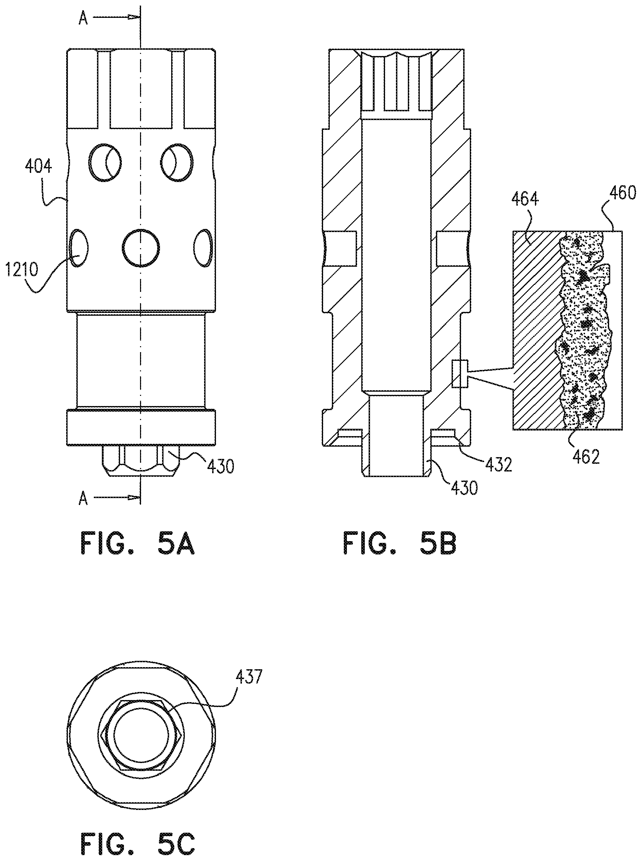

Dental implant installation assembly 400 may generally resemble dental implant installation assembly 100 in relevant aspects thereof, with the exception of the structure of implantation tool 404, seen most clearly in Figs. 5A - 5C. Implantation tool 404 preferably has a lower portion 430 adapted for insertion in opening 120 of implant body 102 and generally resembling lower protrusion 130 of implantation tool 104. Lower portion 430 is preferably embodied as a hexagonal protrusion compatible for insertion in hexagonal opening 120.

Implantation tool 404 further preferably includes at least a second surface peripheral to portion 430, here embodied, by way of example, as a beveled surface 432 angled so as to lie flush with chamfered outwardly sloping segment 116 when installation assembly 400 is in its assembled state, as seen most clearly in Fig. 4C. The base of implantation tool 404 thus may have a truncated cone configuration formed by beveled side walls 432 and a flat apex 433. Beveled side walls 432 may be angled at approximately 45°, although it is appreciated that other angular configurations of beveled side walls 432 are also possible.

An inner bore 434 is preferably formed within a generally cylindrical body 436 of implantation tool 404 for receipt of screw 106 therein. Inner bore 434 preferably has a generally hexagonal entrance 437 located at a top end of cylindrical body 436. When installation assembly 400 is in an assembled state, protrusion 430 of implantation tool 404 is inserted in opening 120 of implant body 102. Implantation tool 404 is secured to implant body 102 by insertion of screw 106 in inner bore 434 of implantation tool 404 and subsequent screwing of screw 106 into threaded bore 124.

Upon assembly of installation assembly 400, at least first and second surfaces of implant body 102 and implantation tool 404 respectively are in mutual contact. Here, by way of example and as seen most clearly at enlargement 438 in Fig. 4C, chamfered outwardly sloping surface 116 of implant body 102 is engaged and in contact with second sloping surface 432 of implantation tool 404 when installation assembly 400 is in its assembled state. It is appreciated that implantation tool 404 is thus engaged with implant body 102 at at least two spatially distributed contact regions, namely the contact region formed at the interface between lower portion 430 and opening 120 and the contact region formed at the interface between surface 116 and beveled side walls 432.

During installation of dental implant body 102, a torque is exerted by implantation tool 404 on dental implant body 102. The torque exerted by implantation tool 404 on dental implant body 102 may be originally applied to implantation tool 404 manually or electronically, by hand and/or via tools, as will be explained in greater detail with reference to Figs. 11 - 12C henceforth.

Due to the configuration of the multiple, spatially distributed contact regions between the implantation tool 404 and the dental implant 102, the torque applied by implantation tool 404 on dental implant body 102 is distributed over dental implant body 102 at least as a torsion torque at opening 120 and a friction torque at second outwardly sloping surface 116.

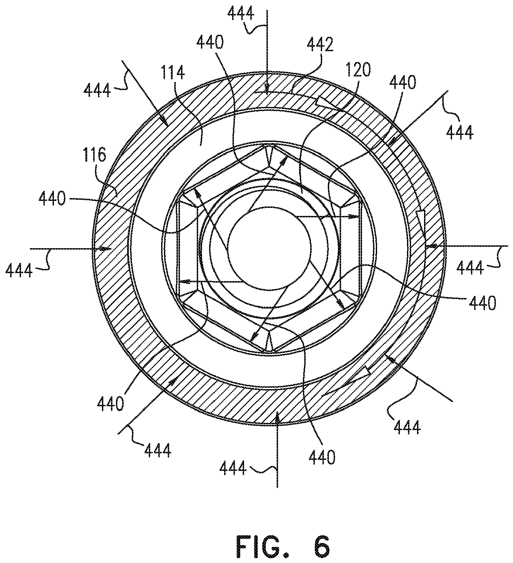

The application of the torsion and friction torques may be best understood by reference to Fig. 6, which is a simplified top view illustration of forces acting on a dental implant in a dental implant installation assembly of the type shown in Figs. 4A - 4C.

As seen in Fig. 6, an torsion torque is preferably exerted by protrusion 430 at hexagonal opening 120, creating a radial force denoted by a first set of arrows 440. The radial force 440 is primarily exerted in the region of the apices of hexagonal opening 120 due to contact thereat between the hexagonal lumen of hexagonal opening 120 and the corresponding apices of hexagonal protrusion 430. In addition, a friction torque, creating a force denoted by a second arrow 442, is preferably exerted by second surface 432 on first surface 116, as indicated by the hatched region of implant body 102. It is appreciated that an additional moment is exerted by screw 106 at the region of contact thereof with inner threaded bore 124.

Additionally, a set of internally directed radial forces, denoted by a third set of arrows 444, is preferably exerted normal to a longitudinal axis of implant body 102 by second surface 432. It is appreciated that the internally directed radial forces denoted by arrows 444 correspond to the horizontal vector component of the force exerted by angled side walls 432 on first surface 116. It is a particular feature of this embodiment of the present invention that internally directed radial forces 444 are exerted by implantation tool 404 on implant body 102 in a direction opposing the externally directed radial forces 440 at hexagonal opening 120, thereby further stabilizing implant body 102 against fracture and/or deformation.

As appreciated from consideration of Fig. 6, the inner torsion torque and friction torque are complementary and create moments in the same direction, such that both the inner torsion and friction torques contribute to the overall torque applied to the implant body 102. However, due to the spatial distribution of the inner torsion torque and friction torque, only a portion of the torque exerted by the implantation tool 404 is applied at the hexagonal opening 120. Additionally, that portion of the torque applied at hexagonal opening 120 is further counteracted by internally directed radial forces 444. This distribution of the torque applied to the dental implant body 102 and consequent reduction of the torque applied to the dental implant body 102 at the hexagonal opening 120, allows a greater total torque to be applied to the dental implant body 102 by the implantation holder 404. In the absence of the implantation holder 404, should an installation torque be applied directly to the implant body, only a weaker force may be applied to the implant body due to the likelihood of damage thereto.

Implantation tool 404 may be formed by Titanium. As is well known in the art, titanium tools tend to leave marks on zirconia implants, which marks may be aesthetically displeasing. It is a particular feature of a preferred embodiment of the present invention that implantation tool 404 may be coated with a layer of titanium oxide, as seen most clearly at an enlargement 460 in Fig. 5B, showing a highly magnified schematic representation of a titanium oxide layer 462 formed on a titanium surface 464.

The titanium oxide coating 462 is preferably integrally bonded to the titanium surface 464 of implantation tool 404 by way of oxidation of the titanium substrate 464 provided by the tool surface itself and is therefore strongly adhered thereto. The titanium oxide coating 462 may be formed by electrolysis, in a manner detailed below with reference to Fig. 13. The titanium oxide coating preferably does not leave marks on zirconia and therefore leads to an improved aesthetic appearance of the installed zirconia implant body 102. Furthermore, the titanium oxide coating is preferably harder than the original titanium comprising tool 404 and therefore more stable.

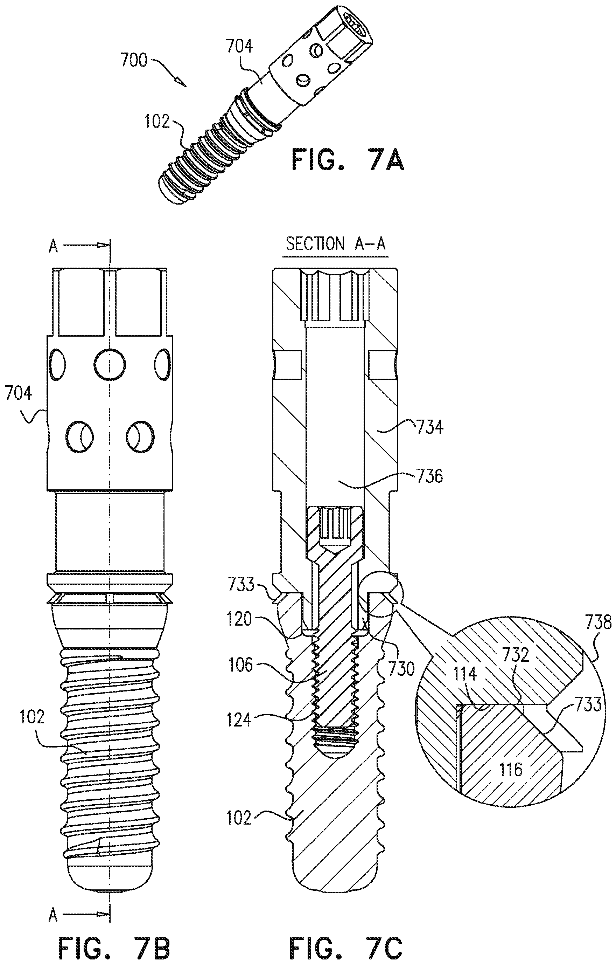

Reference is now made to Figs. 7A - 7C, which are simplified schematic respective isometric, front and cross-sectional view illustrations of a dental implant installation assembly, constructed and operative in accordance with yet another preferred embodiment of the present invention.

As seen in Figs. 7A - 7C, there is provided a dental implant installation assembly 700 preferably including dental implant body 102 and an implantation tool 704 mounted on dental implant body 102. Installation assembly 700 further preferably includes screw 106 connecting dental implant body 102 to implantation tool 704. It is a particular feature of a preferred embodiment of the present invention that the use of implantation tool 704 to install dental implant body 102 allows the application of a sufficiently strong torque to dental implant body 102 to ensure secure installation thereof whilst preventing damage to dental implant body 102, by distributing the installation torque over the dental implant body in a manner to be detailed henceforth.

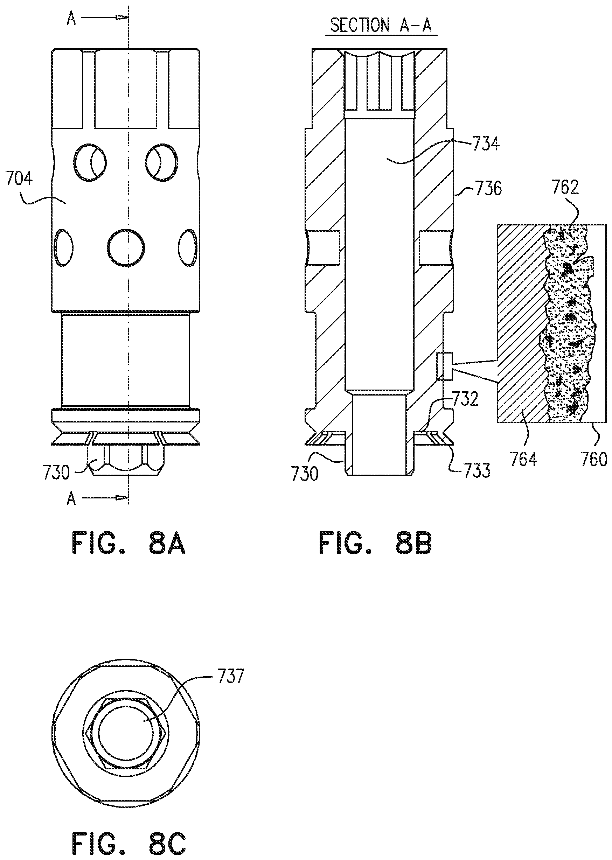

Dental implant installation assembly 700 may generally resemble dental implant installation assemblies 100 and 400 in relevant aspects, with the exception of the structure of implantation tool 704, seen most clearly in Figs. 8A - 8C. Implantation tool 704 preferably has a lower portion 730 adapted for insertion in opening 120 of implant body 102 and generally resembling lower protrusion 130 of implantation tool 104. Lower portion 730 is preferably embodied as a hexagonal protrusion compatible for insertion in hexagonal opening 120.

Implantation tool 704 further preferably includes at least a second surface peripheral to portion 730, here embodied, by way of example, as a first flat surface 732 configured so as to lie flush with uppermost surface 114 and a second beveled surface 733 configured so as to lie flush with chamfered outwardly sloping segment 116 when installation assembly 700 is in its assembled state, as seen most clearly in Fig. 7C. The base of implantation tool 704 thus may have a truncated cone configuration formed by beveled side walls 733 and flat apex 732. It is a particular feature of this embodiment of the present invention that a part of the second surface peripheral to portion 730, embodied herein as second beveled surface 733, may be formed as a segment surface, as seen most clearly in Figs. 7A and 7B. The segmentation of beveled surface 733 imparts flexibility to beveled surface 733. Such flexibility is advantageous in this embodiment of the present invention, since it facilitates simultaneous contact of multiple surfaces of implantation tool 704 with implant body 102, as will be detailed below. Beveled surface 733 may be angled at approximately 45°, although it is appreciated that other angular configurations of beveled surface 733 are also possible.

An inner bore 734 is preferably formed within a generally cylindrical body 736 of implantation tool 704 for receipt of screw 106 therein. Inner bore 734 preferably has a generally hexagonal entrance 737 located at a top end of cylindrical body 736. When installation assembly 700 is in an assembled state, protrusion 730 of implantation tool 704 is inserted in opening 120 of implant body 102. Implantation tool 704 is secured to implant body 102 by insertion of screw 106 in inner bore 734 of implantation tool 704 and subsequent screwing of screw 106 into threaded bore 124.

Upon assembly of installation assembly 700, at least first and second surfaces of implant body 102 and implantation tool 704 respectively are in mutual contact. Here, by way of example and as seen most clearly at enlargement 738 in Fig. 7C, uppermost surface 114 is engaged and in contact with flat apex 732 and chamfered outwardly sloping segment 116 of implant body 102 is engaged and in contact with beveled surface 733 when installation assembly 700 is in its assembled state. It is appreciated that implantation tool 704 is thus engaged with implant body 102 three spatially distributed contact regions, namely the contact region formed at the interface between lower portion 730 and opening 120, the contact region formed at the interface between first uppermost surface 114 and flat apex 732 and the contact region formed at the interface between second sloping surface 116 and beveled surface 733.

During installation of dental implant body 102, a torque is exerted by implantation tool 704 on dental implant body 102. The torque exerted by implantation tool 704 on dental implant body 102 may be originally applied to implantation tool 704 manually or electronically, by hand and/or via tools, as will be explained in greater detail with reference to Figs. 11 - 12C henceforth.

Due to the configuration of the multiple, spatially distributed contact regions between the implantation tool 704 and the dental implant 102, the torque applied by implantation tool 704 on dental implant body 102 is distributed over dental implant body 102 at least as a torsion torque at opening 120 and a friction torque at first and second surfaces 114 and 116.

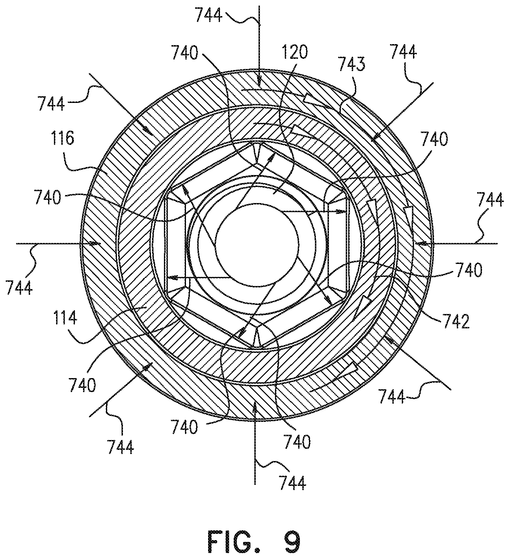

The application of the torsion and friction torques may be best understood by reference to Fig. 9, which is a simplified top view illustration of forces acting on a dental implant in a dental implant installation assembly of the type shown in Figs. 7A - 7C.

As seen in Fig. 9, a torsion torque is preferably exerted by protrusion 730 at hexagonal opening 120, creating radial forces denoted by a first set of arrows 740. The radial forces 740 are primarily exerted in the region of the apices of hexagonal opening 120 due to contact thereat between the hexagonal lumen of hexagonal opening 120 and the corresponding apices of hexagonal protrusion 730. In addition, a first friction torque, creating a force denoted by a second arrow 742, is preferably exerted by first surface 732 on uppermost surface 114, as indicated by the hatched region of implant body 102 and a second friction force, denoted by a third arrow 743, is preferably exerted by beveled surface 733 on chamfered surface 116. It is appreciated that an additional moment is exerted by screw 106 at the region of contact thereof with inner threaded bore 124.

Additionally, a set of internally directed radial forces, denoted by a fourth arrow 744, is preferably exerted normal to a longitudinal axis of implant body 102 by beveled surface 733. It is appreciated that the internally directed radial forces denoted by arrows 744 correspond to the horizontal vector component of the force exerted by angled surface 733 on first surface 116. It is a particular feature of this embodiment of the present invention that internally directed radial forces 744 are exerted by implantation tool 704 on implant body 102 in a direction opposing the externally directed radial forces 740 at hexagonal opening 120, thereby further stabilizing implant body 102 against fracture and/or deformation.

As appreciated from consideration of Fig. 9, the torsion torque and two friction torques are complementary and create moments in the same direction, such that the torsion and friction torques contribute to the overall torque applied to the implant body 102. However, due to the spatial distribution of the torsion torque and friction torques, only a portion of the torque exerted by the implantation tool 704 is applied at the hexagonal opening 120. Additionally, that portion of the torque applied at hexagonal opening 120 is further counteracted by internally directed radial forces 744.

This distribution of the torque applied to the dental implant body 102 and consequent reduction of the torque applied to the dental implant body 102 at the hexagonal opening 120, allows a greater total torque to be applied to the dental implant body 102 by the implantation holder 704. In the absence of the implantation holder 704, should an installation torque be applied directly to the implant body, only a weaker force may be applied to the implant body due to the likelihood of damage thereto.

Implantation tool 704 may be formed by Titanium. As is well known in the art, titanium tools tend to leave marks on zirconia implants, which marks may be aesthetically displeasing. It is a particular feature of a preferred embodiment of the present invention that implantation tool 704 may be coated with a layer of titanium oxide, as seen most clearly at an enlargement 760 in Fig. 8B, showing a highly magnified schematic representation of a titanium oxide layer 762 formed on a titanium surface 764.

The titanium oxide coating 762 is preferably integrally bonded to the titanium surface 764 of implantation tool 704 by way of oxidation of the titanium substrate 764 provided by the tool itself and is therefore strongly adhered thereto. The titanium oxide coating 762 may be formed by electrolysis, in a manner detailed below with reference to Fig. 13. The titanium oxide coating preferably does not leave marks on zirconia and therefore leads to an improved aesthetic appearance of the installed zirconia implant body 102. Furthermore, the titanium oxide coating is preferably harder than the original titanium comprising tool 704 and therefore more stable.

The allowance of the exertion of an increased installation torque on the dental implant body of the present invention as a result of the use of the implantation tool of the present invention, without breaking the dental implant body, is evidenced by experimental data collected by the present inventors.

In order to model the dental implantation assembly of the present invention, dental implant bodies generally resembling dental implant body 102 were connected to implantation tools of types generally resembling each one of implantation tools 104, 404 and 704 respectively. The connecting screw 106 was tightened with a torque of 30 N/cm. The implant bodies were held in a fixing device in a manner so as to simulate insertion into the bone of a patient in a manner allowing the application of an ascending torque. A key was inserted into the hexagonal entrance of the implantation tool with a digital torque gauge connected thereto, in order to measure the torque exerted thereby. For each of the three embodiments of implantation tools 104, 404 and 704 an ascending torque was gradually applied and the torque at which the implant body broke, termed the breaking torque, was measured. 24 or 25 samples were investigated for each case.

The average breaking torques when implantation tools of types resembling implantation tools 104, 404 and 704 were used were found to be 145.1 N/cm, 141.2 N/cm and 142 N/cm respectively. For comparative purposes, the same experiment was repeated in the absence of an implantation tool for 50 samples and an average breaking torque of 43.9 N/cm was measured.

It is thus appreciated, that the use of an implantation tool in accordance with the presence invention allows the torque applied to the dental implant body to be increased by more than 300% without breaking the dental implant body. Furthermore, since a typical installation torque is approximately 50 - 60 N/cm, it is understood that without the use of an implantation tool constructed and operative in accordance with the present invention, the implant body itself is not strong enough to withstand installation. Data collected in the case of use of implantation tool 404 was found to exhibit a larger distribution and include lower values, possibly indicating greater risk of fracture for this embodiment in comparison to the other two embodiments. No significant differences were found between data obtained for uncoated and titanium oxide coated implantation tools, validating that the coating of the implantation tool in order to prevent aesthetic damage to the implant body does not impede the efficacy of the tool.

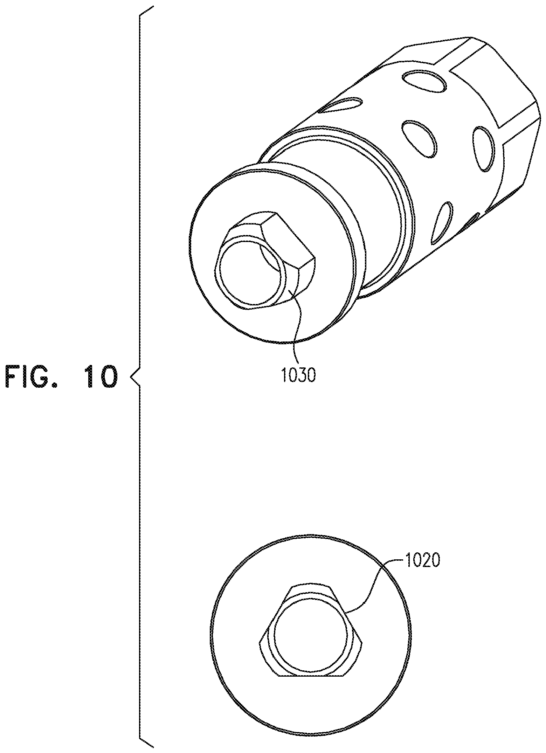

It is appreciated that although in the foregoing examples, opening 120 in implant 102 and corresponding protrusions 130, 430 and 730 of implantation tools 104, 404 and 704 respectively have been described and shown as being hexagonally shaped, this is by way of example only. The opening in the implant body and correspondingly shaped protrusion of the implantation tools of the present invention may be configured in a variety of other suitable geometrical shapes, as will be readily appreciated by one skilled in the art. By way of example only, the opening and protrusion may be triangularly shaped, as illustrated in the case of a generally triangular opening 1020 and a corresponding protrusion 1030 shown in Fig. 10.

It is additionally appreciated that the particular configurations of contacting first and second surfaces of the implant body and implantation tool are illustrative only and that first and second contacting surfaces may have a variety of suitable configurations, including nonplanar and/or non-linear portions, which portions may be continuous or segmented.

It is further appreciated that although in the foregoing examples, head cavities 137, 437 and 737 of implantation tools 104, 404 and 704 respectively are shown to be hexagonally shaped, the head cavity of an implantation tool of the present invention may be configured to have other suitable geometrical shapes.

Reference is now made to Figs. 11A and 11B, which are respectively a simplified pictorial illustration and cross-section thereof of a system for installation of a dental implant using a dental implant installation assembly constructed and operative in accordance with a preferred embodiment of the present invention.

As seen in Figs. 11A and 11B, dental implant body 102 may be installed by application of a torque to an implantation tool, such as implantation tool 704 illustrated herein. It is appreciated that although the installation system of Figs. 11A and 11B is shown herein with respect to implantation tool 704 of installation assembly 700, the installation system is applicable to any one of the installation assemblies of the present invention.

The installation torque may be applied to implantation tool 704 by means of a torque ratchet 1100 connected to a key 1102, which key 1102 may slot into hexagonal head cavity 737 of implantation tool 704, as seen most clearly in Fig. 11B. It is appreciated, however, that the use of torque ratchet 1100 and key 1102 may not be necessary and, in some cases, a user may manually twist implantation tool 704 so as to install implant body 102. An installation torque of approximately 50 - 60 N/cm may be applied. It is appreciated that a head portion of key 1102 is not limited to being hexagonal and may assume any shape compatible with the corresponding head cavity of the implantation tool.

It is thus appreciated that during installation of implant body 102 a torque is preferably directly applied by a user, such as a dentist, to the implantation tool and preferably only indirectly applied by the user to the implantation body 102, by way of the implantation tool.

It is understood that in the installation system of Figs. 11A and 11B, implantation assembly 700 is shown to be pre-assembled, with screw 106 in place and implant body 102 already tightened to implantation tool 704. It is appreciated, however, that in some cases implantation assembly 700 may require full or partial pre-assembly by a user prior to installation of the implant body in a patient. In such a case, screw 106 may be inserted/and or tightened by a user using standard tools, as are well known in the art. The tightening torque to be applied to screw 106 is in accordance with design requirements.

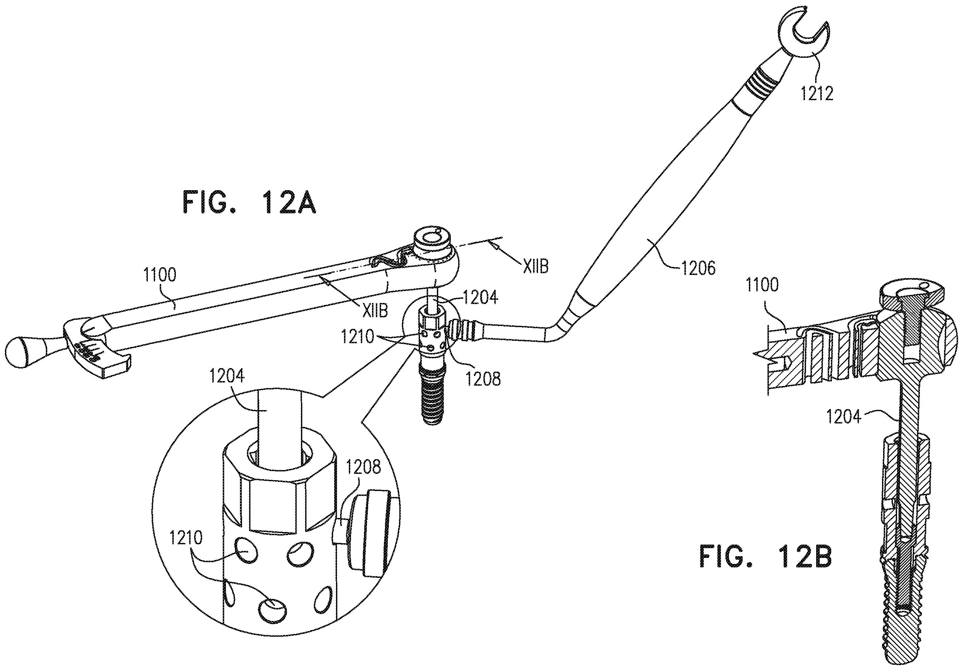

It is appreciated that following implantation of dental implant body 102 in the jaw of a patient, the attached implantation tool must be extracted therefrom. An exemplary system for disassembling a dental implant installation assembly following implantation of a dental implant is shown in Figs. 12A - 12C.

As seen in Figs. 12A - 12C, in order to disassemble a dental implant installation assembly of the present invention, such as assembly 700 illustrated herein, screw 106 may be extracted from the assembly using torque ratchet 1100 to manipulate a screw-driver 1204. In order to prevent displacement of implant body 102 during removal of screw 106, implant body 102 may be held in place by an anti-rotation tool 1206. Anti-rotation tool 1206 may have a post-like head 1208 adapted for entry into one of a multiplicity of holes 1210 formed on an exterior surface of the implantation tool, so as to prevent rotation of the implantation tool during removal of the inner screw 106. Anti-rotation tool 1206 may also have a second spanner-shaped head 1212, which spanner-shaped head 1212 may alternatively be used to secure the implantation tool in place during removal of the screw 106.

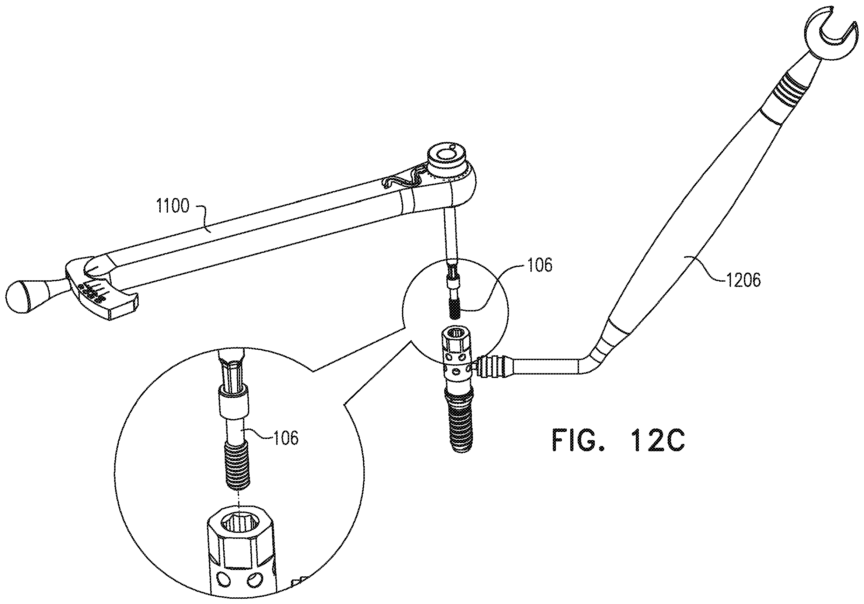

As seen in Fig. 12B, screw-driver 1204 is progressively screwed into screw 106, so as to completely remove screw 106 from assembly 700. Once screw 106 is removed from assembly 700, as seen in Fig. 12C, the implantation tool, such as tool 704, simply falls away from or may be manually removed from dental implant body 102. It is appreciated that the implantation tool of the present invention may be a single-use tool which is disposed subsequent to use. Alternatively, the implantation tool of the present invention may be suitable for multiple, repeated use.

As previously mentioned, the present invention is particularly well-suited for use with zirconia implants, which zirconia implants are more vulnerable to damage during implantation than comparable titanium implants. In order to prevent scratching of the zirconia implant body by a titanium implantation tool, the titanium implantation tool of the present invention is preferably coated with a layer of titanium oxide, such as layers 162, 462 and 762 illustrated in Figs. 3, 5 and 8 respectively. The titanium oxide layer may be formed on the implant holder of the present invention by plasma electrolytic oxidation, in accordance with a process illustrated in Fig. 13.

Reference is now made to Fig. 13, which is a flow chart illustrating a method for coating a titanium element.

As seen in Fig. 13, a method 1300 for coating a titanium-comprising element provided. The method preferably includes providing an element comprising titanium, immersing the element in an electrolyte, providing a cathode in the electrolyte and applying a voltage between the cathode and the titanium element, a titanium oxide coating being formed thereby on the element.

It is appreciated that although the titanium oxide coating and associated method is described herein with reference to the coating of implantation tools 104, 404 and 704, a titanium oxide coating in accordance with the present invention may be applied to any suitable titanium-comprising element, in order to allow the clean use of such elements on zirconia or other surfaces without marking. As explained above, in the absence of such a titanium oxide coating, titanium elements may leave aesthetically displeasing marks on zirconia or other surfaces with which they come into contact. Titanium-comprising elements that may benefit from the titanium oxide coating of the present invention include titanium-comprising dental tools, such as the implantation tools described herein above, titanium-comprising connecting elements, such as screw 106 described herein above as well as titanium-comprising accessories and prosthetics, by way of example only. It is further appreciated that such elements may be disposable or non-disposable elements and may be formed by titanium only or may comprise titanium alloys, as will be detailed below.

It is additionally appreciated that the particular steps of method 1300 described hereinbelow are exemplary only and may be supplemented or substituted as will be apparent to one skilled in the art.

The titanium comprising the element, such as a dental tool, may be a commercially pure, unalloyed titanium, such as ASTM Grade 1, Grade 2, Grade 3 or Grade 4 titanium. ASTM Grade 1 titanium contains a maximum of 0.08% C, 0.03% N, 0.18% O 0.20% Fe and 0.015% H by weight. ASTM Grade 2 titanium contains a maximum of 0.08% C, 0.03% N, 0.25% O 0.30% Fe and 0.015% H by weight. ASTM Grade 3 titanium contains a maximum of 0.08% C, 0.05% N, 0.35% O 0.30% Fe and 0.015% H by weight. ASTM Grade 4 titanium contains a maximum of 0.08% C, 0.05% N, 0.40% O 0.50% Fe and 0.015% H by weight.

Alternatively, the titanium comprising the element, such as a dental tool, may be a titanium alloy. For example, the titanium alloy may be Ti-6Al-7Nb available from RMI Titanium Company of Niles, OH, USA. This alloy contains a maximum of 0.08% C, 0.05% N, 0.20% O, 0.25% Fe, 0.50% Ta, and 0.009% H, as well as 5.5-6.5% A1 and 6.5-7.5% Nb by weight. The alloy may also be ASTM Grade 5 titanium sold as Ti-6Al-4V by RMI Titanium Company. This alloy contains 0.08% C, 0.25% Fe, 0.05% N, 0.20% O and 0.015% H, as well as 5.50-6.75% Al and 3.5-4.5% V by weight. Alternatively, the alloy may be ASTM Grade 23 titanium sold as Ti-6Al-4V ELI (extra low interstitials) by RMI Titanium Company. This alloy contains 0.08% C, 0.25% Fe, 0.03% N, 0.13% O and 0.0125% H, as well as 5.5-6.5% A1 and 3.5-4.5% V by weight.

As seen at a first step 1302 in Fig. 13, the titanium element may be initially cleaned prior to oxidation thereof. The cleaning may include a degreasing step. The degreasing may be carried out with a detergent formed from an alkali, such as sodium hydroxide or potassium hydroxide. Preferably, the pH of the alkali is about 10. Alternatively, the degreasing may be carried out with an organic solvent. Preferred organic solvents include hexane and isopropanol.

As seen at a second step 1304, the titanium element may also be subject to surface etching prior to oxidation thereof. The etching may be carried out in a solution containing an oxidizer such as nitric acid, hydrogen peroxide or persulfate salt and a titanium depassivating agent, such as hydrogen fluoride, hexafluorosilicic acid (H₂SiF₆) or tetrafluoroboric acid (HBF₄).

It is appreciated that although in method 1300 cleaning step 1302 is shown to precede surface etching step 1304, this is not necessarily the case.

Following optional cleaning and etching steps 1302 and 1304, the titanium element maybe immersed in an electrolyte bath containing a cathode, as seen at a third step 1306. The electrolyte is preferably an aqueous acidic electrolyte. The electrolyte preferably contains between 0.1 - 1 mol/L of sulfuric acid, more preferably 0.5 mol/L. The electrolyte also preferably contains between 0.1 - 1 mol/L of phosphoric acid, more preferably 0.5 mol/L. The electrolyte optionally contains up to 1 mol/L hydrogen peroxide, preferably 0.5 mol/L. In an alternative embodiment, the electrolyte is an aqueous alkaline electrolyte. In a further alternative embodiment, the electrolyte is a non-aqueous electrolyte.

The cathode is preferably a stainless steel cathode. The reactions that occur at the cathode are:

4H⁺ + 4e⁻ → 2H₂

H₂O₂ + 2H⁺ + 2e⁻ → 2H₂O

The reaction that occurs at the tool, which functions as the anode, is:

Ti + 2H₂O → TiO₂ + 4H⁺ + 4e⁻

As seen at fourth step 1308, a voltage suitable for plasma electrolytic oxidation is preferably applied. The voltage applied between the electrodes, namely the titanium element and cathode, is preferably in the range of 180 - 250 V, preferably 200 V. The current density ranges from 0.1 - 1 A/cm², preferably 0.2 A/cm². The voltage may be applied in AC or DC mode, preferably DC mode.

Due to the high voltages, the initial titanium oxide layer formed on the surface of the titanium element breaks down, initiating high temperature plasma processes resulting in micro-arc discharges within the layer. The result is a thick layer of mainly crystalline titanium oxide, as shown at a fifth step 1310. The titanium oxide is predominantly in the anatase polymorphic form. Some of the titanium oxide may be in the rutile form.

Since the titanium oxide layer is formed from the titanium element itself and not deposited onto the element, the adhesion between the titanium oxide layer and the element surface is high. Preferably, the adhesion strength ranges from 15 to 40 MPa. The formed titanium oxide layer is preferably harder than titanium or amorphous titanium dioxide. The hardness of the titanium oxide layer is preferably lower than that of zirconia. Preferably, the hardness ranges from 5.5 - 6 on the Mohs scale.

It will be appreciated by persons skilled in the art that the present invention is not limited by what has been particularly claimed hereinbelow. Rather, the scope of the invention includes various combinations and subcombinations of the features described hereinabove as well as modifications and variations thereof as would occur to persons skilled in the art upon reading the forgoing description with reference to the drawings and which are not in the prior art.

## Claims

1. A dental implant installation assembly (100),(400),(700) comprising:
a dental implant body (102) having an opening (120) and at least a first surface (114,116) peripheral to said opening (120);
an implantation tool (104),(404),(704) having a portion (130),(430),(730) adapted for insertion in said opening (120) and at least a second surface (132),(432),(732,733) peripheral to said portion (130),(430),(730); and
a screw (106) for connecting said implantation tool (104),(404),(704) to said dental implant body (102) such that when said portion (130),(430),(730) is inserted in said opening (120) and a torque is exerted by said implantation tool (104),(404),(704) on said dental implant body (102) during installation of said dental implant body (102), said torque is distributed over said dental implant body (102) at least as a torsion torque at said opening(120),
**characterized in that** said at least first surface (114,116) and said at least second surface (132),(432),(732,733) are in mutual contact when said portion (130),(430),(730) is inserted in said opening (120) and the screw (106) is connecting said implantation tool (104),(404),(704) to said dental implant body (102) such that the torque is further distributed over said dental implant body (102) as a friction torque at said first surface (114,116).

2. A dental implant installation assembly (100),(400),(700) according to claim 1, wherein said dental implant body (102) comprises zirconia.

3. A dental implant installation assembly (100),(400),(700) according to claim 1 or claim 2, wherein said implantation tool (104),(404),(704) comprises titanium and has a titanium oxide coating (162),(462),(762) integrally formed thereon.

4. A dental implant installation assembly (100),(400),(700) according to any of the preceding claims, wherein said opening (120) comprises a generally hexagonally shaped opening and said portion (130),(430),(730) comprises a generally hexagonally shaped protrusion.

5. A dental implant installation assembly (100),(400),(700) according to any of the preceding claims, wherein said dental implant body (102) comprises an internal threaded bore (124) adapted for receipt of said screw (106) therein.

6. A dental implant installation assembly (100),(400),(700) according to claim 5, wherein said implantation tool (104),(404),(704) comprises a cylindrical body (136),(436),(736) having an additional internal bore (134),(434),(734) adapted for receipt of said screw (106) therein.

7. A dental implant installation assembly (100),(400),(700) according to any of the preceding claims, wherein said dental implant body (102) comprises an annular generally flat uppermost surface (114) circumferentially surrounding said opening (120), a chamfered outwardly sloping segment (116) abutting said uppermost surface (114) and a chamfered inwardly sloping segment (118) abutting said chamfered outwardly sloping segment (116).

8. A dental implant installation assembly (100),(700) according to claim 7, wherein said implantation tool (104),(704) comprises a flat base (132),(732) peripheral to said portion (130),(730), said uppermost surface (114) comprising said at least first surface, said flat base (132),(732) comprising said at least second surface.

9. A dental implant installation assembly (400),(700) according to claim 7, wherein said implantation tool (404),(704) comprises a beveled side wall (432),(733) peripheral to said portion (430),(730), said chamfered outwardly sloping segment (116) comprising said at least first surface, said beveled side wall (432),(733) comprising said at least second surface.

10. A dental implant installation assembly (700) according to claim 7, wherein said implantation tool (704) comprises a beveled side wall (733) and a flat apex (732) peripheral to said portion (730), said uppermost surface (114) and said chamfered outwardly sloping segment (116) comprising said at least first surface, said flat apex (732) and said beveled side wall (733) comprising said at least second surface.

11. A dental implant installation assembly (400),(700) according to claim 9 or claim 10, wherein said beveled side wall (432),(733) exerts internally directed radial forces on said dental implant body (102), said internally directed radial forces opposing said torsion torque.

12. A dental implant installation assembly (100),(400) according to any of the preceding claims, wherein said second surface (132),(432) peripheral to said portion (130),(430) comprises a continuous surface.

13. A dental implant installation assembly (700) according to any one of claims 1 - 11, wherein said second surface (733) peripheral to said portion (730) comprises a segmented surface.

14. A dental implant installation assembly (100),(400),(700) according to any of the preceding claims, wherein said torque is exerted by said implantation tool (104),(404),(704) on said dental implant body (102) by manually twisting said implantation tool (104),(404),(704).

15. A dental implant installation assembly (100),(400),(700) according to any of the preceding claims, wherein said implantation tool (104),(404),(704) is a single-use tool.

## Patentansprüche

1. Zahnimplantat-Installationsanordnung (100),(400),(700), umfassend:
einen Zahnimplantatkörper (102), der eine Öffnung (120) und mindestens eine erste Oberfläche (114,116), die peripher zu der Öffnung (120) ist, aufweist;
ein Implantationswerkzeug (104),(404),(704), das einen Abschnitt (130),(430),(730), der zum Einsetzen in die Öffnung (120) angepasst ist, und mindestens eine zweite Oberfläche (132),(432),(732,733), die peripher zu dem Abschnitt (130),(430),(730) ist, aufweist; und
eine Schraube (106), um das Implantationswerkzeug (104),(404),(704) mit dem Zahnimplantatkörper (102) so zu verbinden, dass, wenn der Abschnitt (130),(430),(730) in die Öffnung (120) eingesetzt wird und ein Drehmoment von dem Implantationswerkzeug (104),(404),(704) auf den Zahnimplantatkörper (102) während der Installation des Zahnimplantatkörpers (102) ausgeübt wird, das Drehmoment über den Zahnimplantatkörper (102) zumindest als Torsionsdrehmoment an der Öffnung (120) verteilt wird,
**dadurch gekennzeichnet, dass** die mindestens erste Oberfläche (114,116) und die mindestens zweite Oberfläche (132),(432),(732,733) in gegenseitigem Kontakt stehen, wenn der Abschnitt (130),(430),(730) in die Öffnung (120) eingesetzt wird und die Schraube (106) das Implantationswerkzeug (104),(404),(704) mit dem Zahnimplantatkörper (102) so verbindet, dass das Drehmoment weiter über den Zahnimplantatkörper (102) als Reibungsdrehmoment an der ersten Oberfläche (114,116) verteilt wird.

2. Zahnimplantat-Installationsanordnung (100),(400),(700) nach Anspruch 1, wobei der Zahnimplantatkörper (102) Zirkondioxid umfasst.

3. Zahnimplantat-Installationsanordnung (100),(400),(700) nach Anspruch 1 oder Anspruch 2, wobei das Implantationswerkzeug (104),(404),(704) Titan umfasst und eine Titanoxidbeschichtung (162),(462),(762) aufweist, die darauf angeformt ist.

4. Zahnimplantat-Installationsanordnung (100),(400),(700) nach einem der vorhergehenden Ansprüche, wobei die Öffnung (120) eine allgemein sechseckig geformte Öffnung umfasst und der Abschnitt (130),(430),(730) einen allgemein sechseckig geformten Vorsprung umfasst.

5. Zahnimplantat-Installationsanordnung (100),(400),(700) nach einem der vorhergehenden Ansprüche, wobei der Zahnimplantatkörper (102) eine Innengewindebohrung (124) umfasst, die zur Aufnahme der Schraube (106) darin angepasst ist.

6. Zahnimplantat-Installationsanordnung (100),(400),(700) nach Anspruch 5, wobei das Implantationswerkzeug (104),(404),(704) einen zylindrischen Körper (136),(436),(736) umfasst, der eine zusätzliche Innenbohrung (134),(434),(734) aufweist, die zur Aufnahme der Schraube (106) darin angepasst ist.

7. Zahnimplantat-Installationsanordnung (100),(400),(700) nach einem der vorhergehenden Ansprüche, wobei der Zahnimplantatkörper (102) eine ringförmige, allgemein flache oberste Oberfläche (114), die die Öffnung (120) in Umfangsrichtung umgibt, ein abgeschrägtes, nach außen abfallendes Segment (116), das an der obersten Oberfläche (114) anliegt, und ein abgeschrägtes, nach innen abfallendes Segment (118), das an dem abgeschrägten, nach außen abfallenden Segment (116) anliegt, umfasst.

8. Zahnimplantat-Installationsanordnung (100),(700) nach Anspruch 7, wobei das Implantationswerkzeug (104) (704) eine flache Basis (132),(732) umfasst, die peripher zu dem Abschnitt (130),(730) ist, wobei die oberste Oberfläche (114) die mindestens erste Oberfläche umfasst, wobei die flache Basis (132),(732) die mindestens zweite Oberfläche umfasst.

9. Zahnimplantat-Installationsanordnung (400),(700) nach Anspruch 7, wobei das Implantationswerkzeug (404),(704) eine abgeschrägte Seitenwand (432),(733) umfasst, die peripher zu dem Abschnitt (430),(730) ist, wobei das abgeschrägte nach außen abfallende Segment (116) die mindestens erste Oberfläche umfasst, wobei die abgeschrägte Seitenwand (432),(733) die mindestens zweite Oberfläche umfasst.

10. Zahnimplantat-Installationsanordnung (700) nach Anspruch 7, wobei das Implantationswerkzeug (704) eine abgeschrägte Seitenwand (733) und einen flachen Scheitel (732) umfasst, die peripher zu dem Abschnitt (730) sind, wobei die oberste Oberfläche (114) und das abgeschrägte nach außen abfallende Segment (116) die mindestens erste Oberfläche umfassen, wobei der flache Scheitel (732) und die abgeschrägte Seitenwand (733) die mindestens zweite Oberfläche umfassen.

11. Zahnimplantat-Installationsanordnung (400),(700) nach Anspruch 9 oder Anspruch 10, wobei die abgeschrägte Seitenwand (432) (733) nach innen gerichtete Radialkräfte auf den Zahnimplantatkörper (102) ausübt, wobei die nach innen gerichteten Radialkräfte dem Torsionsdrehmoment entgegenwirken.

12. Zahnimplantat-Installationsanordnung (100),(400) nach einem der vorhergehenden Ansprüche, wobei die zweite Oberfläche (132),(432), die peripher zu dem Abschnitt (130),(430) ist, eine durchgehende Oberfläche umfasst.

13. Zahnimplantat-Installationsanordnung (700) nach einem der Ansprüche 1 bis 11, wobei die zweite Oberfläche (733), die peripher zu dem Abschnitt (730) ist, eine segmentierte Oberfläche umfasst.

14. Zahnimplantat-Installationsanordnung (100),(400),(700) nach einem der vorhergehenden Ansprüche, wobei das Drehmoment von dem Implantationswerkzeug (104), (404),(704) auf den Zahnimplantatkörper (102) durch manuelles Verdrehen des Implantationswerkzeugs (104),(404),(704) ausgeübt wird.

15. Zahnimplantat-Installationsanordnung (100),(400),(700) nach einem der vorhergehenden Ansprüche, wobei das Implantationswerkzeug (104),(404),(704) ein Einwegwerkzeug ist.

## Revendications

1. Ensemble (100),(400),(700) pour mise en place d'un implant dentaire comprenant :
un corps d'implant dentaire (102) ayant une ouverture (120) et au moins une première surface (114,116) entourant ladite ouverture (120) ;
un outil d'implantation (104),(404),(704) ayant une partie (130),(430),(730) adaptée pour l'insertion dans ladite ouverture (120) et au moins une deuxième surface (132),(432),(732,733) entourant ladite partie (130),(430),(730) ; et
une vis (106) pour relier ledit outil d'implantation (104),(404),(704) audit corps d'implant dentaire (102) de telle sorte que lorsque ladite partie (130),(430),(730) est insérée dans ladite ouverture (120) et qu'un couple est exercé par ledit outil d'implantation (104),(404),(704) sur ledit corps d'implant dentaire (102) pendant la mise en place dudit corps d'implant dentaire (102), ledit couple est réparti sur ledit corps d'implant dentaire (102) au moins sous forme d'un couple de torsion au niveau de ladite ouverture (120),
**caractérisé en ce que** ladite ou lesdites premières surfaces (114,116) et ladite ou lesdites deuxièmes surfaces (132),(432),(732,733) sont en contact mutuel lorsque ladite partie (130),(430),(730) est insérée dans ladite ouverture (120) et que la vis (106) relie ledit outil d'implantation (104),(404),(704) audit corps d'implant dentaire (102) de telle sorte que le couple est en outre réparti sur le corps d'implant dentaire (102) sous la forme d'un couple de friction au niveau de ladite première surface (114,116).

2. Ensemble (100),(400),(700) pour mise en place d'un implant dentaire selon la revendication 1, dans lequel ledit corps d'implant dentaire (102) comprend de la zircone.

3. Ensemble (100),(400),(700) pour mise en place d'un implant dentaire selon la revendication 1 ou la revendication 2, dans lequel ledit outil d'implantation (104),(404),(704) comprend du titane et sur lequel est formé un revêtement d'oxyde de titane (162),(462),(762) qui en fait partie intégrante.

4. Ensemble (100),(400),(700) pour mise en place d'un implant dentaire selon l'une quelconque des revendications précédentes, dans lequel ladite ouverture (120) comprend une ouverture de forme générale hexagonale et ladite partie (130),(430),(730) comprend une saillie de forme générale hexagonale.

5. Ensemble (100),(400),(700) pour mise en place d'un implant dentaire selon l'une quelconque des revendications précédentes, dans lequel ledit corps d'implant dentaire (102) comprend un alésage fileté interne (124) adapté pour recevoir ladite vis (106) à l'intérieur.

6. Ensemble (100),(400),(700) pour mise en place d'un implant dentaire selon la revendication 5, dans lequel ledit outil d'implantation (104),(404),(704) comprend un corps cylindrique (136),(436),(736) ayant un alésage interne additionnel (134),(434),(734) adapté pour recevoir ladite vis (106) à l'intérieur.

7. Ensemble (100),(400),(700) pour mise en place d'un implant dentaire selon l'une quelconque des revendications précédentes, dans lequel ledit corps d'implant dentaire (102) comprend une surface supérieure annulaire généralement plate (114) entourant ladite ouverture (120) sur sa circonférence, un segment chanfreiné incliné vers l'extérieur (116) aboutant ladite surface supérieure (114) et un segment chanfreiné incliné vers l'intérieur (118) aboutant ledit segment chanfreiné incliné vers l'extérieur (116).

8. Ensemble (100),(700) pour mise en place d'un implant dentaire selon la revendication 7, dans lequel ledit outil d'implantation (104),(704) comprend une base plate (132),(732) entourant ladite partie (130),(730), ladite surface supérieure (114) comprenant ladite ou lesdites premières surfaces, ladite base plate (132),(732) comprenant ladite ou lesdites deuxièmes surfaces.

9. Ensemble (400),(700) pour mise en place d'un implant dentaire selon la revendication 7, dans lequel ledit outil d'implantation (404),(704) comprend une paroi latérale en biseau (432),(733) entourant ladite partie (430),(730), ledit segment chanfreiné incliné vers l'extérieur (116) comprenant ladite ou lesdites premières surfaces, ladite paroi latérale en biseau (432),(733) comprenant ladite ou lesdites deuxièmes surfaces.

10. Ensemble (700) pour mise en place d'un implant dentaire selon la revendication 7, dans lequel ledit outil d'implantation (704) comprend une paroi latérale en biseau (733) et un sommet plat (732) entourant ladite partie (730), ladite surface supérieure (114) et ledit segment chanfreiné incliné vers l'extérieur (116) comprenant ladite ou lesdites premières surfaces, ledit sommet plat (732) et ladite paroi latérale en biseau (733) comprenant ladite ou lesdites deuxièmes surfaces.

11. Ensemble (400),(700) pour mise en place d'un implant dentaire selon la revendication 9 ou la revendication 10, dans lequel ladite paroi latérale en biseau (432),(733) exerce des forces radiales dirigées vers l'intérieur sur ledit corps d'implant dentaire (102), lesdites forces radiales dirigées vers l'intérieur s'opposant audit couple de torsion.

12. Ensemble (100),(400) pour mise en place d'un implant dentaire selon l'une quelconque des revendications précédentes, dans lequel ladite deuxième surface (132),(432) entourant ladite partie (130),(430) comprend une surface continue.

13. Ensemble (700) pour mise en place d'un implant dentaire selon l'une quelconque des revendications 1-11, dans lequel ladite deuxième surface (733) entourant ladite partie (730) comprend une surface segmentée.

14. Ensemble (100),(400),(700) pour mise en place d'un implant dentaire selon l'une quelconque des revendications précédentes, dans lequel ledit couple est exercé par ledit outil d'implantation (104),(404),(704) sur ledit corps d'implant dentaire (102) par la rotation manuelle dudit outil d'implantation dentaire (104),(404),(704).

15. Ensemble (100),(400),(700) pour mise en place d'un implant dentaire selon l'une quelconque des revendications précédentes, dans lequel ledit outil d'implantation (104),(404),(704) est un outil à usage unique.
